# EUROPÄISCHE PATENTANMELDUNG

(11) **EP 3 892 098 A1**
(43) Veröffentlichungstag der Anmeldung: **13.10.2021**
(21) Anmeldenummer: 20169229.0
(22) Anmeldetag: 11.04.2020
(51) Int. Cl.: A23C 1/00, A23C 9/14, B01D 61/00

(54) **VERFAHREN ZUR HERSTELLUNG VON PULVERN THERMOLABILER AUSGANGSSTOFFE**

(71) Anmelder: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(57) **Zusammenfassung**

Vorgeschlagen werden Pulver, die dadurch erhältlich sind oder erhalten werden, dass man:
(a) eine wässrige Lösung eines thermolabilen Ausgangsstoffs ("Feed") zur Verfügung stellt;
(b) die Lösung aus Schritt (a) einer Vorwärtsosmose unterwirft, wobei man ein konzentriertes Permeat P1 und ein verdünntes Retentat R1 erhält; und
(c) das Permeat einem Trocknungsschritt unterwirft.

## Beschreibung

### GEBIET DER ERFINDUNG

Die Erfindung befindet sich auf dem Gebiet der Trocknungstechnologie und beansprucht Pulver von thermolabilen Ausgangsstoffen, ein entsprechendes Herstellverfahren sowie die Verwendung der Endprodukte.

### TECHNOLOGISCHER HINTERGRUND

Viele Stoffe, die der menschlichen Ernährung entweder direkt oder als Ergänzungsmittel dienen, fallen prozesstechnisch als mehr oder minder verdünnte wässrige Lösungen an. Nicht zuletzt, um Transport- und verpackungskosten zu sparen, müssen die Lösungen aufwendig entwässert werden und fallen dann als Pulver an, die entweder als solche oder in einem nachfolgenden Verfestigungsschritt beispielsweise als Tabletten in den Handel kommen.

Bei diesen Stoffen handelt es sich vielfach um natürliche Erzeugnisse wie beispielsweise Proteine, Enzyme (die eine Untergruppe der Proteine darstellen), Kohlenhydrate und komplexe chemische Verbindungen sehr unterschiedlicher Struktur, die völlig verschiedenen Zwecken dienen können, beispielsweise als Vitamine oder Süßstoffe. Ihnen gemeinsam ist jedoch, dass sie thermolabil sind, d.h. die Tendenz zeigen, sich bei zu hoher oder zu langer thermischer Belastung zu zersetzen. Dies ist natürlich für Trocknungsoperationen kontraproduktiv.

### RELEVANTER STAND DER TECHNIK

Die Vorwärtsosmose ("Forward Osmosis") stellt eine Technologie dar, die schon 1888 zur Aufbereitung von Melasse aus Zuckerrohr eingesetzt wurde **(ES 8271).**

Gegenstand der EP 2637770 B1 (MAJOR BARVO) ein System zum Trennen eines Produkts, das als Lösungsmittel in einer zu verarbeitenden Lösung enthalten ist, umfassend mindestens eine Vorwärtsosmosevorrichtung (816), durch die die zu verarbeitende Lösung und eine Ziehlösung fließen, und eine ihr nachgeschaltete Vorrichtung zum Erhalten des Produkts (56, 62) aus der verdünnten Ziehlösung, die aus der Vorwärtsosmosevorrichtung austritt, wobei die Vorwärtsosmosevorrichtung mindestens einen Strömungskanal umfasst, der die zu verarbeitende Lösung leitet, und mindestens einen Strömungskanal, der die Ziehlösung leitet, der Innenraum eines jeweiligen Strömungskanals, der die zu verarbeitende Lösung leitet, zumindest teilweise durch eine semipenneable Membranwand begrenzt ist, die mit dem Lösungsmittel der zu verarbeitenden Lösung, aber nicht mit der darin gelösten Substanz peimbar ist, und mindestens ein die Ziehlösung leitender Strömungskanal auf gegenüberliegenden Seiten durch Membranwände begrenzt ist, die zwei benachbarten Strömungskanälen zugeordnet sind, die die zu verarbeitende Lösung leiten, so dass das Lösungsmittel der zu verarbeitenden Lösung durch die Membranwände in die angrenzenden Strömungskanäle, die die Ziehlösung leiten, gelangt.

Weit verbreitet ist die Vorwärtsosmose auch im Bereich der Brauchwasseraufbereitung. So beschreibt beispielsweise EP 2939729 B1 (DOOSAN HEAVY IND) ein Frischwasserverbundsystem vom Typ Vorwärtsosmose: eine Brennstoffzellenvorrichtung, die eine Kathodenelektrode aufweist, in der Kohlendioxid, das von einer Anlage zugeführt wird, in Carbonat umgewandelt wird, und eine Anodenelektrode, die elektrische Energie erzeugt, indem sie das Carbonation mit Wasserstoff umsetzt und das Kohlendioxid abgibt; und eine Kohlendioxid-Sammeleinheit, die das von der Brennstoffzellenvorrichtung zugeführte Kohlendioxid und das von außen zugeführte Wasser mit Ammoniak umsetzt, welches von einer Trennungseinheit für Zuglösungen getrennt ist, um eine hochkonzentrierte Zuglösung zu erzeugen, und dann die hochkonzentrierte Zuglösung einer VorwärtsosmoseTrennvorrichtung zuzuführen.

Aus der EP 3018104 B1 (DOOSAN HEAVY IND) ist eine Ballastwasserbehandlungsvorrichtung für ein Schiff bekannt, beinhaltend einen Wassersammelteil zum Sammeln von Meerwasser, eine Vorwärtsosmose-Prozesseinheit zum Erzeugen von Ballastwasser und Behandlungswasser, das durch Entsalzen des durch den Wassersammelteil gesammelten Meerwassers erhalten wird, und einen Ballastwassertank zum Speichern des von der Vorwärtsosmose-Prozesseinheit erzeugten Ballastwassers. Da das Meerwasser in einem Vorwärtsosmose-Verfahren aufbereitet wird, kann das im Schiff benötigte Süßwasser bereitgestellt und das aufbereitete Meerwasser als Ballastwasser verwendet werden. Da die im Schiff anfallende Abwärme und das im Schiff entstehende Kohlendioxid zur Aufbereitung des Meerwassers genutzt werden, kann das Ballastwasser kostengünstig und hocheffizient behandelt und produziert werden.

### AUFGBE DER ERFINDUNG

Die Aufgabe der vorliegenden Erfindung hat daher darin bestanden, Lösungen unterschiedlichster thermolabiler Stoffe - nachfolgend als "Feed" bezeichnet - in einer solchen Weise schonend zu entwässern und aufzukonzentrieren, dass in der nachfolgenden Trocknung weniger Wasser abzutrennen ist und infolge der verkürzten Trocknungszeit weniger Zersetzungsprodukte gebildet werden.

### BESCHREIBUNG DER ERFINDUNG

Ein erster Gegenstand der Erfindung betrifft Pulver, die dadurch erhältlich sind oder erhalten werden, dass man:
(a) eine wässrige Lösung eines thermolabilen Ausgangsstoffs ("Feed"), zur Verfügung stellt;
(b) die Lösung aus Schritt (a) einer Vorwärtsosmose unterwirft, wobei man ein konzentriertes Permeat P1 und ein verdünntes Retentat R1 erhält; und
(c) das Permeat einem Trocknungsschritt unterwirft.

Ein weiterer Gegenstand der Erfindung betrifft ein Verfahren zur Herstellung von Pulvern thermolabiler Ausgangsstoffe, umfassend die folgenden Schritte:
(a) Bereitstellung einer wässrigen Lösung eines thermolabilen Ausgangsstoffs;
(b) Unterwerfen der Lösung aus Schritt (a) einer Vorwärtsosmose unter Erhalt eines konzentrierten Permeats P1 und eines verdünnten Retentats P2;
(c) Entwässern des Permeats P1 unter Erhalt eines trockenen Pulvers.

Überraschenderweise wurde gefunden, dass sich mit Hilfe der Vorwärtsosmose wässrige Lösungen thermolabiler Ausgangsstoffe, insbesondere von solchen, die ohnehin bereits eine hohe Tendenz zum Speichern von Feuchtigkeit haben, schonend entwässern lassen, so dass im nachfolgenden Trocknungsschritt sehr viel weniger Wasser abgetrennt werden muss. Dies führt zu deutlich kürzeren Trocknungszeiten und damit zu einer wesentlich geringeren thermischen Belastung des Trockengutes. Mit Hilfe der vorliegenden Erfindung lassen sich beispielsweise neue Molkenproteinpulver erhalten, die eine Restfeuchte von weniger als 2 Gew.-% aufweisen und gegenüber konventionellen Vergleichsprodukten eine erheblich niedrigere Menge an Denaturierungsprodukten von weniger als 1 Gew.-% aufweisen.

### THERMOLABILE AUSGANGSSTOFFE

Die Gruppe der thermolabilen Ausgangsstoffe ist ausgesprochen heterogen und umfasst unterschiedlichste chemische Strukturen wie etwa Proteine, Enzyme, Kohlenhydrate, Pflanzenextrakte sowie Stoffe, die eher über ihre Funktion erfasst werden, wie beispielsweise Vitamine, Süßstoffe, physiologische Kühlstoffe und dergleichen.

Als Ausgangsstoffe besonders bevorzugt sind Stoffe, die der Milch entstammen, vor allem Milch- und Molkenproteine, Lactoferrin oder Lactose.

**Vitamine.** Typische Beispiele für Vitamine umfassen beispielsweise
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllochinon, Menachinon).

**Süßstoffe.** Typische Beispiele für Süßstoffe umfassen:
- Stevioside, speziell Rebaudioside
- Mogroside
- *Rubusoside.*
- Naringin
- Dihydrochalcone sowie
- Glycyrrhizinsäure

**Physiologische Kühlstoffe.** Typische Beispiele für physiologische Kühlstoffe umfassen Menthol, Menthol Methyl Ether, Menthone Glyceryl Acetal (FEMA GRAS¹ 3807), Menthone Glyceryl Ketal (FEMA GRAS 3808), Menthyl Lactate (FEMA GRAS 3748), Menthol Ethylene Glycol Carbonate (FEMA GRAS 3805), Menthol Propylene Glycol Carbonate (FEMA GRAS 3806), Menthyl-N-ethyloxamat, Monomethyl Succinate (FEMA GRAS 3810), Monomenthyl Glutamate (FEMA GRAS 4006), Menthoxy-1,2-propanediol (FEMA GRAS 3784), Menthoxy-2-methyl-1,2-propandiol (FEMA GRAS 3849) sowie den Menthancarbonsäureestern und - amiden WS-3, WS-4, WS-5, WS-12, WS-14 und WS-30 sowie deren Gemischen.

### VORWÄRTSOSMOSE

Die Vorwärtsosmose (FO) ist ein osmotischer Prozess, der eine semipermeable Membran verwendet, um Wasser aus Lösungen abzutrennen. Die treibende Kraft für diese Trennung ist ein osmotischer Druckgradient zwischen einer Lösung mit hoher Konzentration, oft auch als "Draw" bezeichnet, und einer Lösung mit niedrigerer Konzentration, die als "Feed" bezeichnet wird. Der osmotische Druckgradient wird verwendet, um einen Nettowasserfluss durch die Membran zu induzieren und so das Feed effektiv zu konzentrieren. Die Ziehlösung kann aus einem oder mehreren einfachen Salzen bestehen oder ein speziell
¹ FEMA steht für "Flavor and Extracts Manufacturers Association" und GRAS ist definiert als "Generally Regarded As Safe". Eine FEMA GRAS Bezeichnung bedeutet, dass die so gekennzeichnete Substanz nach Standardmethode getestet und für toxikologisch unbedenklich erachtet wird. für die Vorwärtsosmose entwickelter Stoff sein. Die Feed-Lösung kann ein verdünnter Produktstrom, ein Abfallstrom, Meerwasser oder ein Elektrolytstrom sein.

Geeignete Anlagen für eine Vorwärtsosmose werden beispielsweise nachfolgend beschrieben:

EP 3130391 B1 (FLUVICON) beschreibt eine Vorrichtung (100) zum Reinigen von Fluid, wobei die Vorrichtung (100) eine Osmoseeinheit (102) umfasst, die zum Vorreinigen des zu reinigenden Fluids durch Vorwärtsosmose des zu reinigenden Fluids durch eine Osmosemembran (104) in eine Kammer (106) konfiguriert ist, die gelöste erste Ionen, insbesondere erste Kationen und erste Anionen, umfasst, eine lonenaustauschereinheit (108), die zum Austausch mindestens eines Teils der ersten Ionen konfiguriert ist, insbesondere mindestens einen Teil mindestens eines der ersten Kationen und der ersten Anionen, durch zweite Ionen, insbesondere mindestens eines der zweiten Kationen und zweiten Anionen, und eine Rekonzentrationseinheit (110), die konfiguriert ist, um das vorgereinigte Fluid nach dem lonenaustausch in gereinigtes Fluid und in ein mit den jeweiligen Ionen, insbesondere Anionen und Kationen, angereichertes Rekonzentrat zu trennen.

Aus der EP 2623185 B1 (FUJI) ist eine Vorwärts-Osmosevorrichtung bekannt, beinhaltend ein Verdünnungsmittel, um eine Zuführlösung und eine Ziehlösung, die eine Kationenquelle und eine Anionenquelle in ionisiertem Zustand enthält, durch eine semipermeable Membran in Kontakt zu bringen und die Ziehlösung mit Wasser zu verdünnen, das von der Zuführlösung mittels der semipermeablen Membran getrennt ist; ein Trennmittel zum Trennen der verdünnten Ziehlösung in die Kationenquelle und Anionenquelle und in Wasser; und ein Lösemittel, das die getrennte Kationenquelle und die getrennte Anionenquelle zurückführt und die Kationenquelle und die Anionenquelle in der Ziehlösung, die verdünnt wurde, auflöst.

**Durchführung.** Vorzugsweise setzt man Ausgangslösungen als Feed ein, die einen Gehalt an thermolabilen Stoffen im Bereich von etwa 1 bis etwa 25 Gew.-% und insbesondere etwa 3 bis etwa 12 Gew.-% aufweisen.

Die aufgrund des osmotischen Drucks anfallenden Permeate weisen gegenüber dem Feed üblicherweise einen Konzentrationsfaktor von etwa 2 bis etwa 20, vorzugsweise etwa 5 bis etwa 10 auf. Zum Einsatz kommen dabei Ziehlösungen ("Draw"), deren osmotischer Druck in der Regel etwa 5 bis etwa 20 % und insbesondere etwa 10 bis etwa 15 % über dem osmotischen Druck des Feed liegt. Für diesen Zweck eignen sich insbesondere Elektrolytlösungen vorzugsweise Magnesiumsulfatlösung mit typisch 5 bis 20 Gew.-% Salzgehalt.

In der Regel wird die bei einer Temperatur im Bereich von etwa 6 bis etwa 60 °C, vorzugsweise etwa 10 bis etwa 50 °C und insbesondere etwa 20 bis etwa 30 °C durchgeführt.

**Membranen.** Vorwärtsosmose-Membranen sind typischerweise mehr oder weniger ausschließlich gegenüber Wassermolekülen selektiv ausgelegt, was es ihnen ermöglicht, Wasser von allen anderen Verunreinigungen zu trennen. Bei Vorwärtsosmose-Membranprozessen wird die treibende Kraft für die Wasserabscheidung durch die osmotische Druckdifferenz zwischen Lösungen auf beiden Seiten der Vorwärtsosmose-Membran quantifiziert: höhere osmotische Druckdifferenz → höhere Rate der Wasserdiffusion. In idealen Lösungen mit niedriger gelöster Konzentration kann die osmotische Druckdifferenz (ΔΠ) durch die Morsegleichung approximiert werden:
ΔΠ = iRTΔM

Dabei gilt:
- i ist der Van't Hoff-Faktor, der das Dissoziationsmultiple der betreffenden gelösten Spezies widerspiegelt. Für eine verdünnte Lösung von Natriumchlorid ist der Van't Hoff-Faktor gleich 2, da 1 Mol NaCl in 2 Mol gelöste Stoffe in wässriger Lösung zerfällt.
- R ist die Gaskonstante in L*atm*K-1*K-1*M-1
- T ist die Temperatur der Lösung in Kelvin[K].
- M ist die Molarität der Lösung in Molar[M].

Es ist wichtig zu beachten, dass der osmotische Druck eine kolligative Eigenschaft von Lösungen ist, was bedeutet, dass er ausschließlich vom Zahlenverhältnis der gelösten Partikel zu den Lösungsmittelmolekülen in einer Lösung und NICHT von der Art der vorhandenen chemischen Spezies abhängt. Somit übt eine 1M NaCI-Lösung mit einem Van't Hoff-Faktor von 2 den gleichen osmotischen Druck aus wie eine 2M Zuckerlösung mit einem Van't Hoff-Faktor von 1.

Einige geeignete Membranen sind in folgenden Schriften offenbart:
- Wärmeempfindliche Copolymere **(**EP 2641927 B1**,** SAMSUNG)
- Kompositmembranen mit sulfonierten Polyarylethern **(**EP 2701831 B1**,** UNIV SINGA-PUR)
- Bulk Liquid Membrane Matrices (BLM) **(**EP 2442894 B1**,** EP2651542 B1**,** AQUAPORIN)

Es hat sich als besonders vorteilhaft erwiesen, die Vorwärtsosmose mit Hohlfasermembranen durchzuführen, die sich ähnlich wie Rohrbündelwärmeaustauscher verhalten.

In einer besonderen Ausführungsform der vorliegenden Erfindung wird ein Teil des Permeats P1 als Draw im Kreis gefahren, wodurch eine zusätzliche Anreicherung erzielt wird. Es ist auch möglich, das Permeat über einen bestimmten Zeitraum vollständig im Kreis zu fahren, und es erst dann auszuschleusen und in die Trocknungseinheit zu führen, wenn ein bestimmter Konzentrierungsfaktor erreicht ist.

### TROCKNUNG

Zur Trocknung können die Permeate beispielsweise einer Sprühtrocknung oder Gefriertrocknung unterworfen werden, bei der sie bis auf einen Restgehalt von maximal 2 Gew.-%, insbesondere 0,3 bis 1,8 und besonders bevorzugt 0,5 bis 1,5 Gew.-% Wasser entwässert werden.

Vorzugsweise kommt dabei die Sprühtrocknung zum Zuge, wobei die Temperatur im Einlass typischerweise etwa 150 bis etwa 260 °C und am Ausgang etwa 70 bis etwa 105 °C beträgt. Die Fraktion bedarf daher keiner Kühlung bevor sie in den Sprühturm gelangt. Temperaturen von 45 bis 55 °C sind dabei sogar bevorzugt, da auf diese Weise die Gefahr weiter verringert wird, dass beispielsweise Proteine denaturieren.

### GEWERBLICHE ANWENDBARKEIT

Ein weiterer Gegenstand der Erfindung betrifft die Verwendung der erfindungsgemäßen Pulver zur menschlichen Ernährung oder als Nahrungsergänzungsstoffe.

### BEISPIELE

### BEISPIEL 1

### Herstellung eines Molkenproteinpulvers

100 L Molkenproteinkonzentrat WPC60 mit etwa 24 Gew.-% Proteinanteil wurde auf eine Vorwärtsosmose-Anlage gegeben, die bei 25 °C mit einer Polymer-Hohlfasermembran betrieben wurde. Als Draw diente eine 20 Gew.-%ige Magnesiumsulfatlösung. Das Retentat wurde verworfen, das Permeat mit einem Proteingehalt von etwa 68 Gew.-% bei 180°C auf einen Sprühturm gegeben und zu einem Pulver getrocknet, welches noch eine Restfeuchte von 0,75 Gew.-% aufwies. Der Anteil an denaturierten Proteinen lag unter 1 Gew.-%.

### BEISPIEL 2

### Herstellung eines Vitamin C-Pulvers

10 L einer wässrigen Lösung mit etwa 10 Gew.-% Ascorbinsäure wurde auf eine Vorwärtsosmose-Anlage gegeben, die bei 20 °C mit einer Polymer-Hohlfasermembran betrieben wurde. Als Draw diente eine 15 Gew.-%ige Magnesiumsulfatlösung. Das Retentat wurde verworfen und das Permeat solange im Kreis gefahren, bis ein Gehalt an Ascorbinsäure von 20 Gew.-% erreicht war. Dann wurde das Konzentrat zu einem Pulver gefriergetrocknet, welches noch eine Restfeuchte von unter 1 Gew.-% aufwies.

## Patentansprüche

**1.** Pulver, dadurch erhältlich oder erhalten, dass man:
(a) eine wässrige Lösung eines thermolabilen Ausgangsstoffs ("Feed") zur Verfügung stellt;
(b) die Lösung aus Schritt (a) einer Vorwärtsosmose unterwirft, wobei man ein konzentriertes Permeat P1 und ein verdünntes Retentat R1 erhält; und
(c) das Permeat einem Trocknungsschritt unterwirft.

**2.** Pulver nach Anspruch 1, **dadurch gekennzeichnet, dass** der Ausgangsstoff Molkenproteine umfasst und die resultierenden Pulver einen Anteil an denaturierten Proteinen von weniger als 1 Gew.-% aufweisen.

**3.** Verfahren zur Herstellung von Pulvern thermolabiler Ausgangsstoffe, umfassend die folgenden Schritte:
(a) Bereitstellung einer wässrigen Lösung eines thermolabilen Ausgangsstoffs;
(b) Unterwerfen der Lösung aus Schritt (a) einer Vorwärtsosmose unter Erhalt eines konzentrierten Permeats P1 und eines verdünnten Retentats P2;
(c) Entwässern des Permeats P1 unter Erhalt eines trockenen Pulvers.

**4.** Verfahren nach Anspruch 3, **dadurch gekennzeichnet, dass** die thermolabilen Ausgangsstoffe ausgewählt sind aus der Gruppe, die gebildet wird von Proteinen, Enzymen, Vitaminen, Kohlenhydraten, Pflanzenextrakten und Naturstoffen.

**5.** Verfahren nach Anspruch 4, **dadurch gekennzeichnet, dass** es sich um Milch- oder Molkenproteine handelt.

**6.** Verfahren nach mindestens einem der Ansprüche 3 bis 5, **dadurch gekennzeichnet, dass** man einen Feed einsetzt, der einen Gehalt an thermolabilen Ausgangsstoffen im Bereich von 1 bis 25 Gew.-% aufweist.

**7.** Verfahren nach mindestens einem der Ansprüche 3 bis 6, **dadurch gekennzeichnet, dass** man Permeate herstellt, die gegenüber dem Feed einen Konzentrationsfaktor von etwa 2 bis etwa 20 aufweisen.

**8.** Verfahren nach mindestens einem der Ansprüche 3 bis 7, **dadurch gekennzeichnet, dass** man die Vorwärtsosmose mit Ziehlösungen ("Draw") durchführt, deren osmotischer Druck etwa 5 bis etwa 20 % über dem osmotischen Druck des Feed liegt.

**9.** Verfahren nach mindestens einem der Ansprüche 3 bis 7, **dadurch gekennzeichnet, dass** man als Draw Elektrolytlösungen einsetzt.

**9.** Verfahren nach Anspruch 8, **dadurch gekennzeichnet, dass** man als Draw eine Magnesiumsulfatlösung einsetzt.

**10.** Verfahren nach mindestens einem der Ansprüche 3 bis 9, **dadurch gekennzeichnet, dass** man die Vorwärtsosmose bei einer Temperatur im Bereich von etwa 6 bis etwa 60 °C durchführt.

**11.** Verfahren nach mindestens einem der Ansprüche 3 bis10, **dadurch gekennzeichnet, dass** man die Vorwärtsosmose mit Hohlfasermembranen durchführt.

**12.** Verfahren nach mindestens einem der Ansprüche 3 bis 11, **dadurch gekennzeichnet, dass** man einen Teil des Permeats P1 als Draw im Kreis fährt.

**13.** Verfahren nach mindestens einem der Ansprüche 3 bis 12, **dadurch gekennzeichnet, dass** man die Permeate einer Sprühtrocknung oder Gefriertrocknung unterwirft.

**14.** Verfahren nach mindestens einem der Ansprüche 3 bis 13, **dadurch gekennzeichnet, dass** man die Permeate bis auf einen Restgehalt von maximal 2 Gew.-% Wasser trocknet.

**15.** Verwendung der Pulver nach Anspruch 1 oder nach dem Verfahren gemäß Anspruch 3 zur menschlichen Ernährung oder als Nahrungsergänzungsstoffe.
